# FASCICULE DE BREVET EUROPEEN

(11) **EP 1 339 649 B1**
(45) Date de publication et mention de la délivrance du brevet: **26.01.2005**
(21) Numéro de dépôt: 01998157.0
(22) Date de dépôt: 30.11.2001
(51) Int. Cl.: C03C 25/26, C03C 25/34, B01D 39/20

(54) **ELEMENT DE LAINE MINERALE AVEC REACTION AU FEU RENFORCEE, CONDUIT D'AIR COMPRENANT LEDIT ELEMENT**
MINERALWOLLELEMENT MIT VERBESSERTER REAKTION GEGENÜBER FEUER UND DIESES ENTHALTENDER LUFTKANAL
MINERAL WOOL ELEMENT WITH ENHANCED REACTION TO FIRE, AIR DUCT COMPRISING SAME

(30) Priorité: 01.12.2000 ES 200002889
(43) Date de publication de la demande: 03.09.2003
(73) Titulaire: SAINT-GOBAIN ISOVER, 92400 Courbevoie (FR)
(72) Inventeur: RODERO ANTUNEZ, Carlos, E-28006 Madrid (ES)
(74) Mandataire: Vignesoult, Serge L. M.
(86) Numéro de dépôt international: PCT/FR2001/003795
(87) Numéro de publication internationale: WO 2002/044096

(56) Documents cités:
- FR-A- 2 682 403
- FR-A- 2 750 978
- US-A- 5 728 187

## Description

Le présent mémoire descriptif se réfère à une demande de brevet d'invention relative à un élément constitué essentiellement de laine minérale qui présente une réaction au feu renforcée. Un tel élément est notamment mis en forme sous la forme de panneau et est utilisé pour la construction de conduits d'air. Les panneaux comprennent une âme de laine de verre, ladite âme étant formée de fibres de verre qui agissent comme composants de la laine. Les fibres de verre de l'élément selon l'invention présentent un diamètre sensiblement plus grand par rapport au diamètre des fibres de verre qui s'utilisent actuellement pour la fabrication de panneaux ou de conduits d'application similaire. Les fibres de verre utilisées selon l'invention ont un indice de finesse d'une valeur qui fluctue entre 5,8 ± 0,5 pour 6 grammes. L'invention concerne également un procédé de fabrication de conduit d'air à partir desdits panneaux.

L'invention s'applique à l'industrie spécialisée dans la fabrication et la transformation du verre ainsi que la laine minérale et similaires. Elle vise particulièrement des utilisations dans le domaine de la climatisation où l'on utilise abondamment des conduits d'air, notamment des gaines, comprenant des moyens d'isolation thermique.

La demanderesse connaît l'usage actuel, pour la fabrication de conduits d'air, d'élément constitués essentiellement de fibres de verre qui constituent une laine minérale et dont les fibres ont un indice de finesse qui se situe entre 4 ± 0,4 pour 5 grammes. Pour obtenir un produit de qualité avec de telles fibres il faut une application d'apprêt supérieure à 10% en poids. Un tel élément conduit a une mauvaise classification pour ce qui concerne la réaction au feu des conduits d'air qui le comprennent. On entend par "indice de finesse", la valeur obtenue en mesurant la perte de charge d'un gaz qui traverse un échantillon constitué de fibres à caractériser. Cette mesure donne une indication sur le diamètre moyen des fibres et est usuellement connue pour le nom de "mesure du MICRONAIRE". Cette mesure est décrite dans la norme ASTM D1448 (ainsi que DIN 53941). Cette mesure a été initialement développée pour caractériser les fibres de coton et est depuis longtemps utilisée dans l'industrie de la fibre minérale pour caractériser les fibres de verre. On définit "l'indice de finesse" par la valeur lue sur l'appareil "MICRONAIRE" pour une masse donnée de produit.

Dans le cas des fibres utilisées selon l'invention, il faut comprendre que l'on mesure une valeur de MICRONAIRE de 5,8 ± 0,5 quand on introduit une quantité de fibres correspondant à une masse de 6 grammes dans la cellule de mesure de l'appareil "MICRONAIRE".

Pour fixer un ordre de grandeur on peut dire qu'un indice de finesse de 4 ± 0,4 pour 5 grammes correspond à la caractérisation de fibres de verre dont le diamètre moyen est d'environ 3,5 à 4µm, qu'un indice de finesse de 5 ± 0,5 pour 6 grammes correspond à la caractérisation de fibres de verre dont le diamètre moyen est d'environ 9µm et qu'un indice de finesse de 6 ± 0,5 pour 6 grammes correspond à la caractérisation de fibres de verre dont le diamètre moyen est d'environ 12µm.

Pour répondre aux normes en vigueur concernant la réaction au feu, il serait souhaitable de diminuer de manière sensible la teneur en apprêt qui est incorporé à la laine minérale, c'est-à-dire le matériau qui crée une adhérence entre les fibres. Des essais ont montré que des teneurs en apprêt dans une plage qui se situe entre 5% et 6% (de la masse totale du produit fibreux comprenant l'apprêt), permettent de répondre aux normes en vigueur. Cependant, il n'est pas possible d'utiliser de telles teneurs en apprêt avec les fibres connues pour de telles applications, car il en résulterait une diminution inacceptable de la qualité du produit.

La demanderesse n'a donc pas connaissance de l'existence à l'heure actuelle de conduits de laine minérale qui contiennent des fibres de verre pour répondre aux normes en vigueur en matière de réaction au feu.

Le document FR-A-2 750 978 décrit un produit à base de fibres minérales, ayant des diamètres des fibres d'environ 6 à 10 mm, et une quantité d'adhésif de notamment 2 à 20 %, et dans l'exemple 4,5% en poids.

Le document FR-A-2 682 403 décrit un matériau isolant à base de laine de verre, ayant une finesse (micronaire) compris entre 2,2 et 3,1 sous 5 g, et une quantité d'adhésif compris entre 1 et 4,5% en poids.

Le document US-A-5 728 187 décrit un produit à base de fibres minérales, ayant des diamètres de 3 à 4,1 x 10⁻⁵ inch (0,76 à 1,04 µm) et une quantité d'adhésif de 12 à 17 % en poids.

L'élément constitué essentiellement de laine minérale avec réaction au feu renforcée proposé par l'invention constitue en soi une nouveauté en présentant, dans le contexte de son application, des fibres de verre, notamment de type silico-sodo-boro-calcique, d'un diamètre sensiblement plus grand que celui utilisé dans les fibres utilisées actuellement. De manière surprenante, il a été constaté expérimentalement que des fibres de verre, tout particulièrement celles qui présentent un indice de finesse qui se situe entre 5,8 ± 0,5 pour 6 grammes, permettent d'obtenir des éléments destinés à être mis en forme en panneaux qui présentent de bonnes propriétés d'usage, même quand on diminue fortement le taux d'apprêt, notamment quand on utilise entre 5 et 6% d'apprêt. Il devient alors possible d'obtenir un élément à base de laine de verre susceptible de présenter une réaction au feu améliorée et de répondre aux normes en vigueur. A partir d'un tel élément on peut former des panneaux pour la fabrication de conduit d'air.

La structure de ces panneaux est notamment du type des panneaux connus sous la dénomination commerciale "CLIMAVER" ou "CLIMAVER PLUS" (commercialisés par exemple par la société ISOVER). On peut par exemple fabriquer à partir d'éléments selon l'invention des panneaux rigides tels que décrits dans la demande de brevet FR 2 786 550.

De manière concrète, un conduit de laine minérale avec réaction au feu renforcée est constitué à partir d'un panneau destiné à la construction de conduits d'air, ledit panneau étant constitué d'une âme de laine de verre qui présente un diamètre de fibres de verre notablement supérieur à celui des produits employés à l'heure actuelle, défini par un indice de finesse qui fluctue entre 5,8 ± 0,5 pour 6 grammes et où la quantité d'apprêt incorporé à ces fibres se situe dans la plage de 5% à 6%.
Selon un mode de réalisation préféré, l'apprêt est un liant obtenu à partir d'une résine formophénolique.

Le conduit de laine minérale avec réaction au feu renforcée suggéré est constitué à partir d'un panneau pour la fabrication de conduits d'air composé d'une âme de laine de verre qui présente un indice de finesse qui fluctue entre 5,8 ± 0,5 pour 6 grammes, et une teneur en apprêt notamment en adhésif, comprise entre 5% et 6%.

De manière préférée l'apprêt est un liant obtenu à partir d'une résine formophénolique.

Pour réaliser de tel conduit de laine minérale, on peut notamment utiliser des profilés tels que décrits dans la demande de brevet EP 0 791 791.

L'invention concerne également un procédé de fabrication de conduit d'air, notamment de gaine de chauffage et/ou de conditionnement d'air ; ledit procédé comprend une étape d'assemblage de panneaux définis ci-dessus.

## Revendications

1. Elément constitué essentiellement de laine minérale destiné à fabriquer des panneaux pour la construction de conduits d'air, ledit élément étant composé d'une âme de laine minérale à laquelle est ajouté un adhésif, **caractérisée en ce que** les fibres de la laine minérale sont des fibres de verre, notamment de type silico-sodo-boro-calcique, qui ont un indice de finesse qui fluctue entre 5,8 ± 0,5 pour 6 grammes, **et en ce qu**'un adhésif leur est ajouté en quantité qui fluctue entre 5% et 6%.

2. Elément selon la revendication 1 **caractérisé en ce que** l'adhésif est un liant obtenu à partir d'une résine formophénolique.

3. Panneau en laine minérale, **caractérisé en ce que** la laine minérale est une laine de fibres de verre, notamment de type silico-sodo-boro-calcique, lesdites fibres de verre ayant un indice de finesse entre 5,8 ± 0,5 pour 6 grammes et ladite laine comprend un adhésif dont le taux est compris entre 5% et 6%.

4. Panneau selon la revendication 3 **caractérisé en ce que** l'adhésif est un liant obtenu à partir d'une résine formophénolique.

5. Conduit d'air, notamment gaine de conditionnement d'air et/ou de chauffage, comprenant des panneaux en laine de verre selon l'une des revendications 3 ou 4.

6. Procédé de fabrication de conduit d'air, notamment de gaine de conditionnement d'air et/ou de chauffage, **caractérisé en ce qu'**il comprend une étape d'assemblage de panneaux selon l'une des revendications 3 ou 4.

## Patentansprüche

1. Element, das im Wesentlichen aus Mineralwolle besteht, zur Herstellung von Paneelen für den Bau von Luftleitungen vorgesehen ist und sich aus einem Mineralwollekern, welchem ein Bindemittel zugesetzt worden ist, zusammensetzt, **dadurch gekennzeichnet, dass** die Fasern der Mineralwolle Glasfasern, insbesondere vom Typ Kalk-Natrium-Borosilicatglas, sind und eine Feinheit besitzen, die zwischen 5,8 ± 0,5 bei 6 Gramm schwankt, und dass die Menge des ihnen zugesetzten Bindemittels zwischen 5 und 6 % schwankt.

2. Element nach Anspruch 1, **dadurch gekennzeichnet, dass** das Bindemittel ein aus einem Formaldehydphenolharz erhaltenes Bindemittel ist.

3. Paneel aus Mineralwolle, **dadurch gekennzeichnet, dass** diese eine Wolle aus Glasfasern, insbesondere vom Typ Kalk-Natrium-Borosilicatglas, ist, die Glasfasern eine Feinheit von zwischen 5,8 ± 0,5 bei 6 Gramm besitzen und diese Wolle ein Bindemittel umfasst, dessen Anteil zwischen 5 und 6 % beträgt.

4. Paneel nach Anspruch 3, **dadurch gekennzeichnet, dass** das Bindemittel ein aus einem Formaldehydphenolharz erhaltenes Bindemittel ist.

5. Luftleitung, insbesondere Luft- und/oder Beheizungskanal für eine Klimaanlage, die Glaswollepaneele nach Anspruch 3 oder 4 umfasst.

6. Verfahren zur Herstellung einer Luftleitung, insbesondere eines Luft- und/oder Beheizungskanals für eine Klimaanlage, **dadurch gekennzeichnet, dass** es eine Stufe des Zusammenbaus von Paneelen nach Anspruch 3 oder 4 umfasst.

## Claims

1. Element which is substantially constituted by mineral wool for producing panels for the construction of air ducts, the element being composed of a core of mineral wool to which an adhesive agent is added, **characterised in that** the fibres of mineral wool are glass fibres, in particular of the silica-soda-boron-calcium type, which have a fineness rating which varies between 5.8 ± 0.5 per 6 grammes, and **in that** an adhesive agent is added to the fibres in a quantity which varies between 5% and 6%.

2. Element according to claim 1, **characterised in that** the adhesive agent is a binder obtained from a formophenolic resin.

3. Mineral wool panel, **characterised in that** the mineral wool is a glass fibre wool, in particular of the silica-soda-boron-calcium type, the glass fibres having a fineness rating of between 5.8 ± 0.5 per 6 grammes, and **in that** the wool comprises an adhesive agent whose content is between 5% and 6%.

4. Panel according to claim 3, **characterised in that** the adhesive agent is a binder obtained from a formophenolic resin.

5. Air duct, in particular air conditioning and/or heating duct, comprising panels of glass wool according to either claim 3 or claim 4.

6. Method for producing an air duct, in particular an air conditioning and/or heating duct, **characterised in that** it comprises a panel assembly step of mineral wool panels according to either claim 3 or claim 4.
